# EUROPEAN PATENT SPECIFICATION

(11) **EP 4 335 529 B1**
(45) Date of publication and mention of the grant of the patent: **20.05.2026**
(21) Application number: 22194699.9
(22) Date of filing: 08.09.2022
(51) Int. Cl.: A63C 19/10, E04C 2/38, F16M 13/02, G09F 9/302, G09F 9/33, H04N 5/64

(54) **BORDER ELEMENT ARRANGEMENT**
RANDELEMENTANORDNUNG
AGENCEMENT D'ÉLÉMENTS DE BORDURE

(43) Date of publication of application: 13.03.2024
(73) Proprietor: Vepe-Icepro Oy, 86300 Oulainen (FI)
(72) Inventor: SAVOLAINEN, Henri, 04300 Tuusula (FI); MOILANEN, Joni, 15610 Lahti (FI); SYVÄNEN, Janne, 00730 Helsinki (FI)
(74) Representative: Salomäki, Juha Kari Ensio

(56) References cited:
- EP-A1- 3 091 528
- US-A1- 2018 130 389
- US-B1- 6 813 853
- US-B1- 9 326 620

## Description

The object of the invention is a border element arrangement as defined in the preamble of claim 1.

The border element arrangement according to the invention is suited for use as, *inter alia,* a border bounding a playing field or competition area, whereby a number of border elements can be connected e.g. end-to-end consecutively to isolate the desired area from its surrounds. One such playing area bounded in this way can be e.g. an ice hockey rink, in which case the border elements are the dasher boards of an ice hockey rink.

There are generally many spectators at sports events and some events are also televised, in which case the number of spectators increases significantly. Earlier, e.g. the dasher boards of ice hockey rinks were of one color, essentially a pale color, and devoid of anything else apart from markings associated with the game. However, dasher boards provide a good space for advertisements, so this space has started to be utilized.

Plastic stickers, among other things, which are fastened in a detachable manner to the dasher board, have been used in the advertisements and other notifications of dasher boards. A problem with them, however, is that small pieces of them drop onto the ice dislodged by impacts from hockey pucks and hockey sticks. At the same time also the quality of advertising images deteriorates.

One solution that has been used is a clear and transparent plastic sheet disposed on the inside of the dasher boards of an ice hockey rink, e.g. an acrylic or polycarbonate sheet, with a thin advertising image, advertising text, or an image or color film presenting other information, being situated between the plastic sheet and the surface of the dasher board. One problem with this solution is, however, that the view of the advertisement is static. Another problem is that the advertisements cannot be smoothly changed during the game.

Advertising structures and information structures of the roller blind type have also been disposed in dasher boards. One such is presented in, *inter alia,* international patent specification no. WO9838623 A1. The solution according to the specification comprises an element which has a transparent window on one side, and disposed inside the frame of the element are two rollers, one above the other, one in the upper section and the other in the lower section of the frame. The structure includes a web containing the information, which can be wound onto the rollers and moved between the rollers. In addition, the element comprises machinery for rotating the rollers. By means of the control system in the element, the desired section of the web can be rotated so as to be visible through the window. A problem in this solution is that the structure is complex and only a limited amount of information fits onto one web. Another problem is that the roller structure of the specification cannot be situated e.g. in the curved corners of an ice hockey rink. Furthermore, the view of the advertisement is static.

Newer prior art is presented in United States patent no. US6698121 B2. The specification discloses digital dasher boards for a sports arena, such as for an ice hockey rink. Each digital dasher board comprises a display panel, which is a perforated board at least the size of the display area, into the apertures of which panel the LEDs in a straight LED cluster are inserted in such a way that the LEDs protrude through the perforated display panel board. Each board-type LED unit has a plurality of LEDs configured in rows and columns. A plurality of LED clusters are fastened to the display panel, side-by-side and one above another, the LEDs of which clusters together form the information area of the display panel. The display panel is fastened at its upper edge and lower edge to support elements provided with a shock absorber, and in front of the LEDs is a transparent protective sheet. The dasher board is very complex in structure and requires precise installation work. Also, for example, replacement of a broken display element and placing it back into the many holes of the display panel is difficult and requires precision, and therefore extra time is used to do this.

United States patent application publication no. US 2018/0130389 A1 discloses a display apparatus comprising plurality of display units. However, these kind of display units are not well suited to be placed in locations where they are subject to hits or impacts, such as ice hockey rinks.

United States patent publication no. US 6,813,853 B1 discloses another display system also comprising plurality of display units. However, these kind of display units are not well suited to be placed in locations where they are subject to hits or impacts either.

European patent application publication no. EP 3 091 528 A1 discloses yet another display system also comprising plurality of display units. However, these kind of display units are not well suited to be placed in locations where they are subject to hits or impacts either.

United States patent publication no. US 9,326,620 B1 discloses yet another display system also comprising plurality of display units. However, these kind of display units are not well suited to be placed in locations where they are subject to hits or impacts either.

The purpose of the present invention is to eliminate the aforementioned drawbacks and to provide an inexpensive, simple, operationally reliable border element arrangement that can be rapidly installed and also disassembled. Another purpose is to provide a display panel system forming the whole surface of the border assembly as seamlessly as possible. The border element arrangement according to the invention is characterized by what is disclosed in the characterization part of claim 1. Other embodiments of the invention are characterized by what is disclosed in the other claims.

To achieve this purpose, the border element arrangement according to the invention comprises two or more border elements abutting each other side-by-side, the elements comprising a frame provided with end bars and a structure connecting the end bars at least in the top part and bottom part of the frame, and disposed to be supported by the frame a digital display comprising one or more display panels that is capable of displaying a moving image, as well as a protective sheet in front of the display. Preferably both end edges of the display are adapted to extend to the same vertical plane as the outer surface of the positioned end bar.

One advantage of the border element arrangement according to the invention is that by means of the invention advertising revenues receivable from the border elements can be multiplied by virtue of the moving image content. Furthermore, the display solution of the border elements enables the use of various special effects e.g. in ice hockey matches or in other events. Another advantage is also that installation and disassembly of the border elements is easy and fast. Yet another advantage is that the digital display according to the invention can also be situated in the curved sections of the border elements, e.g. in the curved sections of an ice hockey rink.

In the following, the invention will be described in more detail by the aid of one example of its embodiments with reference to the simplified and diagrammatic drawings attached, wherein
- Fig. 1: presents a diagrammatic and simplified view of one border element according to the invention as viewed obliquely from the front,
- Fig. 2: presents a diagrammatic and simplified view of one border element according to the invention as viewed obliquely from the rear,
- Fig. 3: presents a diagrammatic and simplified rear view of a magnified detail of one end of a border element according to the invention as viewed obliquely from above,
- Fig. 4: presents a diagrammatic and simplified view of one display panel to be used in a border element according to the invention as viewed obliquely from the rear,
- Fig. 5: presents a partly simplified and magnified detail of an end of one border element according to the invention, sectioned along the section line A-A of Fig. 7,
- Fig. 6: presents a diagrammatic and simplified view of the end bar of the frame of a border element according to the invention, and
- Fig. 7: presents a diagrammatic and simplified view of one border element according to the invention as viewed from the end, and an end bar partially sectioned at its top part.

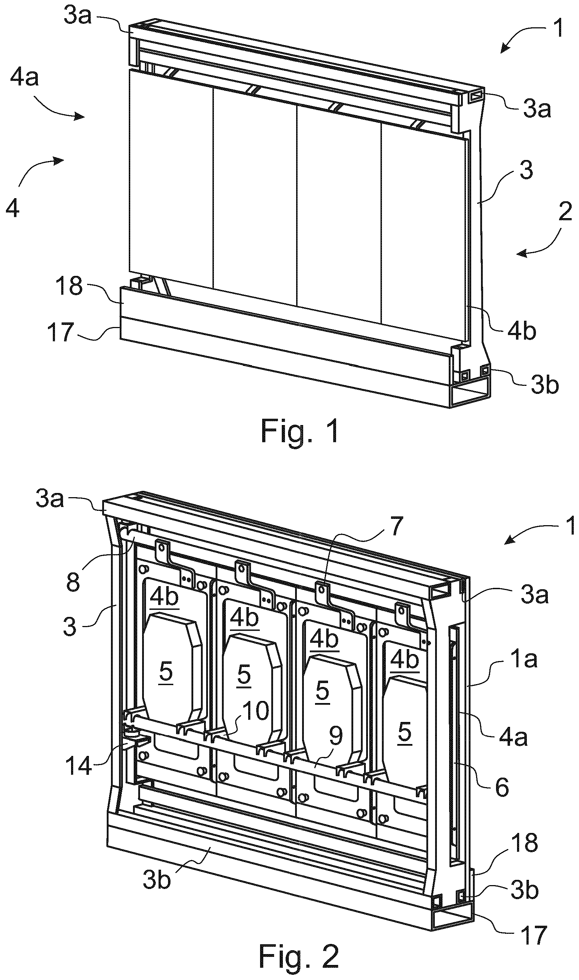

Fig. 1 presents a diagrammatic and simplified view of one border element 1 according to the invention as viewed obliquely from the front. The border element 1 comprises a frame 2, which is preferably a ring-shaped structure with top bars 3a, bottom bars 3b and the end bars 3 connecting these. There can be more than one top bar and more than one bottom bar in a single border element 1. A plurality of display panels 4a forming a digital display 4, such as a LED display, are suspended on the frame 2.

Preferably the height of one display panel 4a is essentially equal to the height of the whole display area of the border element 1. In addition, the display elements 4b of the display panels 4a are adapted to be fastened to each other at their end edges, in which case there is no gap between the display elements 4b in the assembly of border elements 1 disturbing the information displayed by the display elements 4b, except for special border elements, such as e.g. border elements comprising opening gates, in which small gaps are possible at the point of the gates. Preferably the total combined width of the display elements 4b is equal to the distance of the outer surfaces of the end bars 3 of the border element 1 from each other. In this case, e.g. the video image to be displayed on the inside of the border of an ice hockey rink is continuous and can move around the border from one dasher board 1 to another seamlessly.

In Fig. 1, the protective sheet 1a protecting the display elements 4b is missing from the front of the display elements 4b, which protective sheet is placed in front of the display 4 in the finished structure and fastened e.g. by riveting to the frontmost top and bottom bar 3a, 3b of the frame 2 between the frontmost bottom bar 3b and the front plate 18. The protective sheet 1a shown in Figs. 2, 5 and 7 is a clear and transparent sheet suitable for the purpose, such as e.g. an acrylic or polycarbonate sheet.

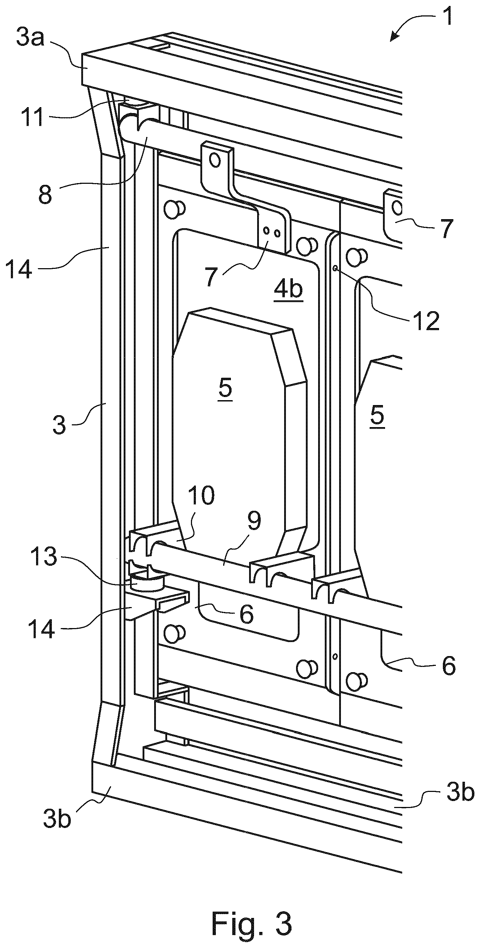

Figs. 2 and 3 present a diagrammatic and simplified view of one dasher board 1 according to the invention as viewed from the rear, in other words e.g. as viewed from outside the ice hockey rink. Fig. 2 presents an oblique rear view from above of the border element 1, and Fig. 3 presents an oblique rear view from above of an enlarged detail of one end of one border element 1 according to the invention, with the top and bottom suspensions of the display panels 4a.

Each display panel 4a comprises a support frame 6, which is, in turn, fastened by means of suspension means 7 to an essentially horizontal support rod 8 in the upper part of the border element 1. The side edges of the support frame 6 are bent backwards at right angles to the front surface of the support frame 6 in such a way that the side edges form the fastening surfaces for adjacent support frames 6. The support frame 6, with the outer surfaces of its side edges, is preferably as wide as the display element 4b fastened to the front side of the support frame 6, i.e. the distance between the outer surfaces of the side edges equals the width of the display element 4b. Thus, adjacent display panels 4a are easy to fasten seamlessly to each other. When the support frame 6 is as wide as the display element 4b, adjacent display panels 4a can easily be fastened to each other with tightened fastening means 12, such as screws and nuts, in the fixing holes in the side edges of the support frame 6. The front surface and the front side refer to that side on which the image of the display element 4 is visible. The rear side is the opposite side.

The distance between the outer surfaces of the side edges of the support frame 6 can also be smaller than the width of the display element 4b. In this case, a filler of a suitable thickness, e.g. one or more washers or a shim, can be placed between the outer surfaces of the side edges of the support frames 6 of adjacent display panels 4a in conjunction with the fastening.

The suspension means 7 of the upper end of the display panel 1 can be e.g. a flat bar fabricated into a suitable shape and bent, which bar advantageously keeps the upper end of the display panel 4a in position. The support rod 8 is placed in the upper part of the frame 2 of the border element 1 between the end bars 3 of the border element 1. At both ends of the support rod 8, or near its ends, is one shock absorber means 11, which is preferably disposed between the support rod 8 and the top bar 3a of the border element 1, to absorb horizontal and upward directed forces caused by a possible impact on the display element 4b. Preferably there is a shock absorber means 11 only on both ends of the support rod 8, so that one border element 1 only has two units of them, one at each end.

Correspondingly, the display panels 4a are supported at their lower part by a horizontal strut rod 9, each end of which is adapted to be supported by a second shock absorber 13 below the strut rod 9, the shock absorber being supported on a support means 14 fastened to the end bar 3 of the frame. Preferably the strut rod 9 is circular in its cross-section, e.g. a round tube. The lower part of the display panels 4a comprises two support means 10 extending backwards from the display panel 4a and fastened to the support frame 6 near its side edges. The lower edge of the support means 10 is provided with a round upwardly curved support surface, the radius of curvature of which is the same or greater than the radius of the outer surface of the strut rod 9, and which support surface is adapted to rest on the top surface of the strut rod 9. By virtue of the shape of its support surface, the support means 10 are adapted to prevent movement in the front-rear direction of the lower part of the display panels 4a as well as the downward movement of the display panels 4a.

Due to the circular cross-section of the strut rod 9 and the curved supporting surface of the support means 10, the display panel 4a is easy and quick to fasten into position when installing it and, if necessary, to detach. When detaching, for example, it is sufficient to detach only the suspension means 7 of the upper end from the support rod 8, in which case the display panel 4a can be turned backwards at its upper end around the strut rod 9 and lifted out of its position. Installation of a display panel into its position is performed in the reverse sequence.

Since the support means 10 is not fastened to the strut rod 9, the display panel 4a can, if necessary, also be moved sideways on the strut rod 9. This also facilitates and speeds up the installation and, if necessary, the replacement of e.g. a faulty display panel 4a.

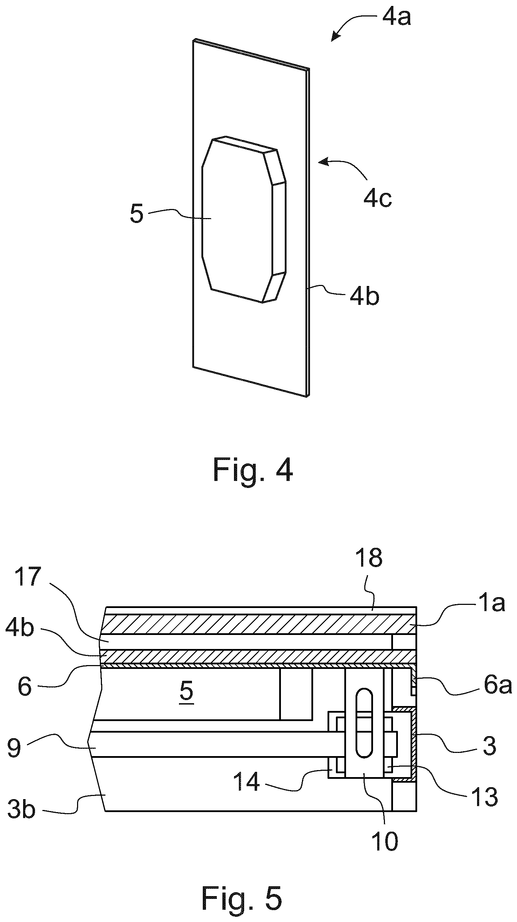

Fig. 4 presents one display panel 4a to be used in a border element 1 according to the invention, as viewed obliquely from the rear, without the support frame 6 and components fastened to it. A display panel 4a comprises, *inter alia,* a display element 4b, on the front side 4c of which is a display surface and on the rear side of which is an electronics unit 5 with control unit and control system.

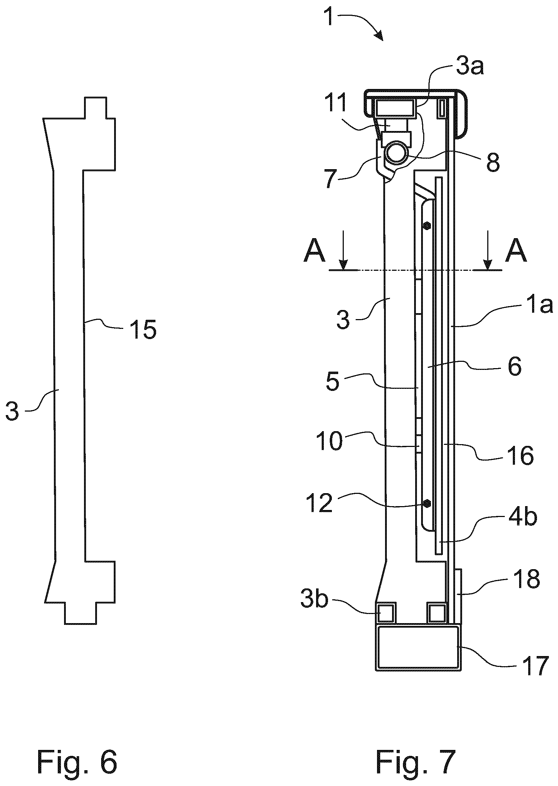

Fig. 5 presents a partly simplified view of a magnified detail of an end of one border element 1 according to the invention, as viewed in the direction of the arrows along the section line A-A of Fig. 7. The figure clearly shows that the outer surface of the side edge 6a of the support frame 6, the side edge of the display element 4b, the side edge of the protective sheet 1a and the outer surface of the end bar 3 are all on the same straight line, i.e. on the same vertical plane in the operating position of the border element 1. This enables an essentially unitary display surface, on which the moving information flow can be seamlessly presented. The outer surface of the end bar 3 is the surface that faces the corresponding outer surface of the end bar of the adjacent border element 1. Correspondingly, the side edge of the display element 4b and the side edge of the protective sheet 1a are those edges that face the corresponding edges of the adjacent border element 1.

Figs. 6 and 7 present a diagrammatic and simplified view of one end bar 3 of the frame 2 of a border element 1 according to the invention and a border element 1 as viewed from the end. Fig. 6 presents just an end bar 3 and Fig. 7 presents a view of a border element 1 provided with display panels 4a, a protective sheet 1a and other components, wherein the end bar 3 is partially sectioned at its upper end.

Preferably the end bar 3 is fabricated from metal, by cutting and welding from steel plate, and by reinforcing the bar by bending the edges of the blank into a right angle with the end surface to be formed. In this case the bends of the end bars 3 in a finished frame 2 face each other.

On the front edge of both end bars 3 of the frame, in other words e.g. when a dasher board 1 is part of an ice hockey rink on the edge inside the rink, is a recess 15 extending from the front edge of the end bar 3 towards the rear edge, for situating the outermost side edges of the edgemost display panels 4a in the dasher board 1 on the same vertical plane as the outer surface of the end bar 3. The height of the recess 15 is then greater than, or equal to, the maximum height of the display panel 4a and the depth is dimensioned in such a way that there is an air gap 16 between the display surface on the front side 4c of the display element 4b and the protective sheet 1a in front of it. This air gap 16 both cools the display 4 and improves the impact resistance of the display element 4b because the distance of the front surface of the display element 4b to the surface of the protective sheet 1a increases. In this case even a hard impact on the protective sheet 1a does not bend the protective sheet 1a so much as to collide with the display surface of the display element 4b.

The basic color of the front surface of the display elements 4b and the display panels 4a is preferably white or light and arranged to operate in such a way that the points where the light sources of the display are not, at a certain moment, active appear white or light in the display. This improves e.g. the visual contrast of the black puck against the dasher board in hockey play.

It is obvious to the person skilled in the art that different embodiments of the invention are not limited to the example described above, but that they may be varied within the scope of the claims presented below. Thus, for example, the structure of the border elements can also be different than what is described above.

It is also obvious to the person skilled in the art that there can be display panels and/or display elements in one border element also one above another in addition to just one beside another, or both one above another and one beside another. It is also possible that there is only one display element, the area of the display surface of which covers the whole display area.

## Claims

1. Border element arrangement comprising two or more border elements (1) abutting each other side-by-side, the elements comprising a frame (2) provided with end bars (3) and a structure connecting the end bars (3) at least in the top part and bottom part of the frame (2), and disposed to be supported by the frame is a digital display (4) comprising one or more display panels (4a) that is capable of displaying a moving image, as well as a protective sheet (1a) in front of the display (4), in which case both end edges of the display (4) are adapted to extend to the same vertical plane as the outer surface of the end bar (3) when positioned, and the border element (1) comprises a horizontal support rod (8), on which one or more display panels (4a) are suspended from their upper ends, **characterized in that** the horizontal support rod (8) is provided with a shock absorber (11), on which each display panel (4a) arranged side-by-side is suspended from its upper end, and the border element (1) comprises a horizontal strut rod (9) provided with a shock absorber (13), upon which rod each display panel (4a) arranged side-by-side is supported at its lower end.

2. Border element arrangement according to claim 1, **characterized in that** each display panel (4a) is supported at its lower end with support means (10) resting on the strut rod (9), which support means are adapted to prevent movement of the display panel (4a) in the backward-forward direction as well as in the downward direction.

3. Border element arrangement according to claim 1 or 2, **characterized in that** the border element (1) comprises two or more display panels (4a), one beside another, and their display elements (4b), the total combined width of which display elements (4b) is equal to the distance of the outer surfaces of the end bars (3) of the border element (1) from each other.

4. Border element arrangement according to claim 1, 2 or 3, **characterized in that** on the front edge of both end bars (3) is a recess (15), inside which the display (4) is disposed at the point of the end bar (3).

5. Border element arrangement according to claim 4, **characterized in that** the height of the recess (15) is greater than, or equal to, the maximum height of the display panel (4a), and the depth of the recess (15) is dimensioned in such a way that between the display surface on the front side (4c) of the display element (4b) and the protective sheet (1a) in front of said surface is an air gap (16).

6. Border element arrangement according to claim 4 or 5, **characterized in that** both end edges of the display (4) are adapted to extend at the point of the recess (15) to the same plane as the outer surface of the end bar (3).

7. Border element arrangement according to claim 4, 5 or 6, **characterized in that** the outermost display panels (4a) of two adjacent border elements (1) are fastened to each other in such a way that the display surfaces of the display elements (4b) are attached to each other at their end edges.

8. Border element arrangement according to any of the preceding claims, **characterized in that** on the rear surface of the display panel (4a) is a support frame (6), via which the display panel (4a) is fastened into position and is also fastened to the support frame (6) of the display panel next to it with fastening means (12).

## Patentansprüche

1. Rahmenelementanordnung, umfassend zwei oder mehr Rahmenelemente (1), die nebeneinander aneinanderstoßen, wobei die Elemente einen Rahmen (2) mit Endstreben (3) sowie eine Struktur aufweisen, welche die Endstreben (3) zumindest im oberen und unteren Bereich des Rahmens (2) verbindet, und wobei innerhalb des Rahmens ein digitales Display (4) angeordnet ist, das ein oder mehrere Anzeigepanels (4a) umfasst und zur Darstellung bewegter Bilder geeignet ist, sowie eine Schutzscheibe (1a) vor dem Display (4), wobei beide seitlichen Endkanten des Displays (4) so ausgeführt sind, dass sie im montierten Zustand bis zur gleichen vertikalen Ebene wie die Außenfläche der Endstrebe (3) reichen, und wobei das Rahmenelement (1) eine horizontale Trägerstange (8) umfasst, an der ein oder mehrere Anzeigepanels (4a) an ihren oberen Enden aufgehängt sind, **dadurch gekennzeichnet, dass** die horizontale Trägerstange (8) mit einem Stoßdämpfer (11) versehen ist, an dem jedes nebeneinander angeordnete Anzeigepanel (4a) an seinem oberen Ende aufgehängt ist, und dass das Rahmenelement (1) eine horizontale Strebenstange (9) mit einem Stoßdämpfer (13) umfasst, auf der jedes nebeneinander angeordnete Anzeigepanel (4a) an seinem unteren Ende abgestützt ist.

2. Rahmenelementanordnung nach Anspruch 1, **dadurch gekennzeichnet, dass** jedes Anzeigepanel (4a) an seinem unteren Ende mittels Stützmitteln (10) abgestützt ist, die auf der Strebenstange (9) aufliegen, wobei die Stützmittel so ausgelegt sind, dass sie eine Bewegung des Anzeigepanels (4a) sowohl in Vorwärts-/Rückwärtsrichtung als auch in Abwärtsrichtung verhindern.

3. Rahmenelementanordnung nach Anspruch 1 oder 2, **dadurch gekennzeichnet, dass** das Rahmenelement (1) zwei oder mehr Anzeigepanels (4a) nebeneinander umfasst sowie deren Anzeigeelemente (4b), deren gesamte kombinierte Breite dem Abstand zwischen den Außenflächen der Endstreben (3) des Rahmenelements (1) entspricht.

4. Rahmenelementanordnung nach Anspruch 1, 2 oder 3, **dadurch gekennzeichnet, dass** an der Vorderkante beider Endstreben (3) jeweils eine Ausnehmung (15) vorgesehen ist, innerhalb derer das Display (4) im Bereich der jeweiligen Endstrebe (3) angeordnet ist.

5. Rahmenelementanordnung nach Anspruch 4, **dadurch gekennzeichnet, dass** die Höhe der Ausnehmung (15) größer oder gleich der maximalen Höhe des Anzeigepanels (4a) ist und die Tiefe der Ausnehmung (15) so bemessen ist, dass zwischen der Anzeigefläche an der Vorderseite (4c) des Anzeigeelements (4b) und der davor angeordneten Schutzscheibe (1a) ein Luftspalt (16) vorhanden ist.

6. Rahmenelementanordnung nach Anspruch 4 oder 5, **dadurch gekennzeichnet, dass** beide Endkanten des Displays (4) im Bereich der Ausnehmung (15) so ausgebildet sind, dass sie bis zur gleichen Ebene wie die Außenfläche der Endstrebe (3) reichen.

7. Rahmenelementanordnung nach Anspruch 4, 5 oder 6, **dadurch gekennzeichnet, dass** die jeweils äußersten Anzeigepanels (4a) zweier benachbarter Rahmenelemente (1) so miteinander verbunden sind, dass die Anzeigeflächen der Anzeigeelemente (4b) an ihren Endkanten aneinandergefügt sind.

8. Rahmenelementanordnung nach einem der vorhergehenden Ansprüche, **dadurch gekennzeichnet, dass** an der Rückseite des Anzeigepanels (4a) ein Tragrahmen (6) vorgesehen ist, über den das Anzeigepanel (4a) in seiner Position befestigt ist und zudem mittels Befestigungsmitteln (12) mit dem Tragrahmen (6) des benachbarten Anzeigepanels verbunden ist.

## Revendications

1. Dispositif d'éléments de bordure comprenant deux ou plusieurs éléments de bordure (1) juxtaposés les uns aux autres, lesdits éléments comprenant un cadre (2) muni de barres d'extrémité (3) et d'une structure reliant les barres d'extrémité (3) au moins dans les parties supérieure et inférieure du cadre (2), et disposé de manière à être supporté par le cadre se trouve un écran numérique (4) comprenant un ou plusieurs panneaux d'affichage (4a) capable d'afficher une image animée, ainsi qu'une feuille de protection (1a) devant l'écran (4), auquel cas les deux bords d'extrémité de l'écran (4) sont adaptés pour s'étendre dans le même plan vertical que la surface extérieure de la barre d'extrémité (3) lorsqu'ils sont positionnés, et l'élément de bordure (1) comprend une tige de support horizontale (8), sur laquelle un ou plusieurs panneaux d'affichage (4a) sont suspendus par leurs extrémités supérieures, **caractérisé en ce que** la tige de support horizontale (8) est pourvue d'un amortisseur (11), sur lequel chaque panneau d'affichage (4a) disposé côte à côte est suspendu par son extrémité supérieure, et l'élément de bordure (1) comprend une tige de renfort horizontale (9) munie d'un amortisseur (13), sur laquelle chaque panneau d'affichage (4a) disposés côte à côte est supporté par son extrémité inférieure.

2. Dispositif d'éléments de bordure selon la revendication 1, **caractérisé en ce que** chaque panneau d'affichage (4a) est soutenu à son extrémité inférieure par des moyens de support (10) reposant sur la tige de renfort (9), lesquels moyens de support sont adaptés pour empêcher le déplacement du panneau d'affichage (4a) dans le sens avant-arrière ainsi que vers le bas.

3. Dispositif d'éléments de bordure selon la revendication 1 ou 2, **caractérisé en ce que** l'élément de bordure (1) comprend deux ou plusieurs panneaux d'affichage (4a) disposés côte à côte, et leurs éléments d'affichage (4b), dont la largeur totale combinée est égale à la distance entre les surfaces extérieures des barres d'extrémité (3) de l'élément de bordure (1).

4. Dispositif d'éléments de bordure selon la revendication 1, 2 ou 3, **caractérisé en ce que** le bord avant des deux barres d'extrémité (3) comporte un évidement (15), à l'intérieur duquel l'écran (4) est disposé au niveau de la barre d'extrémité (3).

5. Dispositif d'éléments de bordure selon la revendication 4, **caractérisé en ce que** la hauteur de l'évidement (15) est supérieure ou égale à la hauteur maximale du panneau d'affichage (4a), et la profondeur de l'évidement (15) est dimensionnée de telle sorte qu'il existe un espace d'air (16) entre la surface d'affichage sur la face avant (4c) de l'élément d'affichage (4b) et la feuille de protection (1a) située devant ladite surface.

6. Dispositif d'éléments de bordure selon la revendication 4 ou 5, **caractérisé en ce que** les deux bords d'extrémité de l'écran (4) sont conçus pour s'étendre, au niveau de l'évidement (15), dans le même plan que la surface extérieure de la barre d'extrémité (3).

7. Dispositif d'éléments de bordure selon la revendication 4, 5 ou 6, **caractérisé en ce que** les panneaux d'affichage les plus extérieurs (4a) de deux éléments de bordure adjacents (1) sont fixés l'un à l'autre de telle sorte que les surfaces d'affichage des éléments d'affichage (4b) soient assemblées entre elles au niveau de leurs bords d'extrémité.

8. Dispositif d'éléments de bordure selon l'une quelconque des revendications précédentes, **caractérisé en ce que**, sur la face arrière du panneau d'affichage (4a), se trouve un cadre de support (6) grâce auquel le panneau d'affichage (4a) est fixé en place et est également relié au cadre de support (6) du panneau d'affichage adjacent à l'aide de moyens de fixation (12).
